# EUROPÄISCHE PATENTSCHRIFT

(11) **EP 1 359 085 B1**
(45) Veröffentlichungstag und Bekanntmachung des Hinweises auf die Patenterteilung: **30.11.2005**
(21) Anmeldenummer: 03004116.4
(22) Anmeldetag: 26.02.2003
(51) Int. Cl.: B62D 53/06, B62D 61/12

(54) **Verfahren zur Aktivierung der Achsliftvorrichtung eines Sattelkraftfahrzeuges**
Process for activating an axle lift device of a semi-trailer motor vehicle
Procédé pour activer un dispositif de levage pour essieux d'un véhicule à moteur semi-remorque

(30) Priorität: 30.04.2002 DE 10219281
(43) Veröffentlichungstag der Anmeldung: 05.11.2003
(73) Patentinhaber: BPW Bergische Achsen KG, 51674 Wiehl (DE)
(72) Erfinder: Rhein, Bernd, 51491 Overath (DE)
(74) Vertreter: Christophersen & Partner

(56) Entgegenhaltungen:
- DE-A- 4 442 488
- GB-A- 2 282 111
- US-A- 4 398 738
- US-B1- 6 240 339
- PATENT ABSTRACTS OF JAPAN Bd. 1998, Nr. 04, 31. März 1998 (1998-03-31) & JP 9 323578 A (MITSUI ZOSEN AIMUKO KK), 16. Dezember 1997 (1997-12-16)
- PATENT ABSTRACTS OF JAPAN Bd. 0113, Nr. 72 (M-648), 4. Dezember 1987 (1987-12-04) & JP 62 146708 A (MARUYAMA SEISAKUSHO:KK), 30. Juni 1987 (1987-06-30)

## Beschreibung

Die Erfindung betrifft ein Verfahren zur Aktivierung der Achsliftvorrichtung eines Sattelkraftfahrzeuges mit mehrachsigem, insbesondere dreiachsigem Sattelauflieger, dessen erste Achse anhebbar ist.

Sattelkraftfahrzeuge mit dreiachsigem Sattelauflieger, dessen erste oder letzte Achse anhebbar ist, sind für verschiedene Einsatzzwecke bekannt. Bei geringer Beladung des Sattelaufliegers kann mittels eines Schalters am Auflieger die Liftachse angehoben werden, um den Verschleiß und die Kraftstoffkosten zu senken. Bei dieser Ausführung ist der vorzugsweise als pneumatischer Schalter ausgebildete Schalter manuell zu betätigen, um die Liftachse anzuheben bzw. abzusenken. Zusätzlich ist es möglich, einen Überlastschutz vorzusehen, der bei zu hohem Luftfederbalgdruck die Liftachse automatisch absenkt.

Bei einer zweiten Ausführung wird über eine pneumatische Regelung bei bestimmtem Druckniveau der Luftfederung der Achslift aktiviert bzw. deaktiviert, um den von Hand zu betätigenden Schalter zu vermeiden. Bei beiden Ausführungen existiert keine Verbindung zum Motorwagen.

Bei einer dritten bekannten Möglichkeit erfolgt die Aktivierung der Achsliftvorrichtung aus dem Fahrerhaus des Motorwagens, wenn eine zusätzlich Traktionshilfe bei schlechten Straßenbedingungen erwünscht ist. Die angehobene Achse bewirkt eine höhere Achslast auf der Triebachse, wie sie beispielsweise als Anfahrhilfe oder als Traktionshilfe im Gelände oder bei Schnee und Eis erforderlich ist. In diesem Fall ist gesetzlich vorgeschrieben, daß entweder zeitabhängig, beispielsweise nach 90 Sekunden, oder geschwindigkeitsabhängig oberhalb einer Geschwindigkeit von 30 km/h die Liftachse automatisch wieder abgesenkt wird.

Bei in Europa standardisierten Sattelkraftfahrzeugen mit einem zwischen dem Königszapfen und der Mitte des Dreiachsaggregates gemessenen Radstand von 7700 mm bis 7900 mm ist die Kreisfahrtvorschrift mit gelifteter Vorderachse des Dreiachsaggregates nicht einzuhalten. Diese Kreisfahrtvorschrift schreibt die Einhaltung eines äußeren Kurvenradius von 12,5 m und eines inneren Kurvenradius von 5,3 m vor. Diese Bedingungen lassen sich mit dem erwähnten Radstand zwischen 7700 mm und 7900 mm nur mit einem Auflieger-Dreiachsaggregat ohne Liftachse oder mit einem Dreiachsaggregat mit einer sogenannten Nachlauflenkachse als letzter Achse erfüllen; die Nachlauflenkachse kann hierbei mit einer Liftvorrichtung ausgestattet sein.

Der Erfindung liegt die **Aufgabe** zugrunde, bei einem Sattelkraftfahrzeug mit mehrachsigem, vorzugsweise dreiachsigem Sattelauflieger, dessen vordere Achse anhebbar ist, trotz eines zwischen Königszapfen und Mitte des Achsaggregates gemessenen Radstandes von 7700 mm bis 7900 mm die gesetzliche Kreisfahrtvorschrift mit einem Außenkreis von 12,5 m und einem Innenkreis von 5,3 m einzuhalten.

Die Lösung dieser Aufgabenstellung durch die Erfindung ist dadurch gekennzeichnet, daß bei einer Kreisfahrt unterhalb eines vorgebbaren Radius die Achsliftvorrichtung im Sinne einer Absenkung der ersten Achse betätigt wird.

Durch Absenkung der vorderen Liftachse des Achsaggregates unterhalb eines vorgebbaren Radius trägt die Liftachse sofort zur effektiven Radstandsverkürzung bei, so daß die Kreisfahrtvorschrift erfüllt wird. Nach Beendigung der Kreisfahrt wird, gegebenenfalls unter Einhaltung einer Mindestzeit, insbesondere zur Vermeidung eines unnötig hohen Druckluftverbrauchs bei kurz hintereinander erfolgenden Kreisfahrten, die Achse wieder angehoben. Der vorgebbare Radius wird so gewählt, daß bei Erreichen des kritischen Wertes die Achse bereits abgesenkt ist.

Gemäß weiteren Merkmalen der Erfindung kann die Erkennung der Kreisfahrt entweder durch einen Knickwinkelsensor im Bereich der Sattelplatte des Sattelkraftfahrzeuges oder durch einen Lenkwinkelsensor in der Motorwagenlenkung oder aber mittels des Drehzahlunterschiedes zwischen einem kurveninneren und einem kurvenäußeren Rad einer Achse erfolgen.

Während der Knickwinkel- bzw. Lenkwinkelsensor einen gewissen Aufwand erfordert, stellt die Ermittlung der Drehzahldifferenz einer der drei Aufliegerachsen die einfachste Lösung dar. Beim Befahren eines Kreises mit einem Außenradius von 12,5 m und dem bei einer Fahrzeugbreite von 2,5 m zugehörigen Innenradius von 10,0 m ergibt sich bereits eine Drehzahldifferenz zwischen kurveninnerem und kurvenäußerem Rad von 20 %. Diese Drehzahldifferenz läßt sich einfach und kostengünstig mittels einer mit ABS ausgerüsteten Achse ermitteln. Es ist deshalb nicht notwendig, zusätzliche Bauteile am Sattelkraftfahrzeug bzw. Sattelauflieger anzuordnen.

Das erfindungsgemäße Verfahren zur Aktivierung der Achsliftvorrichtung eines Sattelkraftfahrzeuges mit dreiachsigem Sattelauflieger erfordert somit keine besonderen Installationen am Fahrzeug. In die Schaltung kann eine geschwindigkeitsabhängige Funktion der Traktionshilfe entweder negierend oder integrierend eingearbeitet werden.

In der Praxis wird somit bei einem Sattelfahrzeug, dessen Sattelauflieger mit einem Achsaggregat mit vorderer Liftachse ausgebildet ist, für den Fall, daß infolge einer Leerfahrt oder Teilbeladung die vordere Achse angehoben ist, bei enger Kurvenfahrt die angehobene Achse kurzzeitig automatisch abgesenkt, um den Radstand zur Einhaltung der Kreisfahrtvorschriften zu verringern. Dieser Vorgang wird automatisch eingeleitet, sobald ein vorgegebener Radius der Kreisfahrt unterschritten wird; er wird beendet, sobald die Kreisfahrt beendet ist und/oder eine bestimmte Zeit verstrichen ist.

Da die kurzzeitige Absenkung der Achse nur für eine Kreisfahrt mit einem einen bestimmten Wert unterschreitenden Radius und damit kurzzeitig erfolgt, hat dies keinen meßbaren Einfluß auf die Vorteile, die mit einer anhebbaren Achse erzielt werden. Fährt das Sattelfahrzeug mit abgesenkter Achse, erfolgt keine Aktivierung der Achsliftvorrichtung.

Gemäß einem weiteren Merkmal der Erfindung erfolgt die Aktivierung der Achsliftvorrichtung im Sinne einer Absenkung der ersten Achse des Achsaggregates bereits bei der Einfahrt in eine Kurve mit vorgegebenem Radius. Hierdurch wird erzielt, daß sich das Achsaggregat bei Erreichen des kritischen Zustandes bereits in einem Zustand befindet, in dem die Liftvorrichtung wirkungslos und die Federbälge der Luftfederachse mit dem entsprechenden Druck gefüllt sind. Die Einhaltung der Kreisfahrtvorschriften wird somit sichergestellt.

Bei Rangierfahrt und/oder Rückwärtsfahrt kann die Betätigung der Achsliftvorrichtung der vorderen Achse im Sinne einer Absenkung dieser Achse ausgeschaltet werden.

Für den Fall, daß das Achsaggregat auch mit einer anhebbaren hinteren Achse ausgerüstet ist, unterbleibt bei angehobener hinterer Achse die Absenkung der vorderen Achse.

Bei kurvenreicher Strecke, beispielsweise bei einer Serpentinenabfahrt, kann die vordere Achse ständig abgesenkt werden. Vorzugsweise erfolgt die ständige Absenkung durch manuelle Betätigung eines im Fahrerhaus befindlichen Schalters.

## Patentansprüche

1. Verfahren zur Aktivierung der Achsliftvorrichtung eines Sattelkraftfahrzeuges mit mehrachsigem, vorzugsweise dreiachsigem Sattelauflieger, dessen erste Achse anhebbar ist,
**dadurch gekennzeichnet,**
**daß** bei einer Kreisfahrt unterhalb eines vorgebbaren Radius die Achsliftvorrichtung im Sinne einer Absenkung der ersten Achse betätigt wird.

2. Verfahren nach Anspruch 1, **dadurch gekennzeichnet, daß** die Erkennung der Kreisfahrt durch einen Knickwinkelsensor im Bereich der Sattelplatte oder durch einen Lenkwinkelsensor in der Motorwagenlenkung erfolgt.

3. Verfahren nach Anspruch 1, **dadurch gekennzeichnet, daß** die Erkennung der Kreisfahrt mittels des Drehzahlunterschiedes zwischen einem kurveninneren und einem kurvenäußeren Rad einer Achse erfolgt.

4. Verfahren nach einem der Ansprüche 1 bis 3, **dadurch gekennzeichnet, daß** die Aktivierung der Achsliftvorrichtung bei der Kurveneinfahrt erfolgt.

5. Verfahren nach einem der Ansprüche 1 bis 4, **dadurch gekennzeichnet, daß** die Betätigung bei Rangierfahrt und/oder Rückwärtsfahrt ausgeschaltet wird.

6. Verfahren nach einem der Ansprüche 1 bis 5, **dadurch gekennzeichnet, daß** für den Fall, daß das Achsaggregat auch mit einer anhebbaren hinteren Achse ausgerüstet ist, die Absenkung der vorderen Achse bei angehobener hinterer Achse unterbleibt.

7. Verfahren nach einem der Ansprüche 1 bis 6, **dadurch gekennzeichnet, daß** bei kurvenreicher Strecke die vordere Achse ständig abgesenkt wird.

8. Verfahren nach Anspruch 7, **dadurch gekennzeichnet, daß** die ständige Absenkung durch manuelle Betätigung eines Schalters erfolgt.

## Claims

1. Process for activating the axle lift device of a semitrailer motor vehicle with a multi-axle semitrailer, preferably a three-axle semitrailer, the first axle of which can be lifted, **characterized in that**, during a circular travel below a predefinable radius, the axle lift device is actuated to lower the first axle.

2. Process according to Claim 1, **characterized in that** the circular travel is detected by a bend angle sensor in the region of the semitrailer deck or by a steering angle sensor in the vehicle steering system.

3. Process according to Claim 1, **characterized in that** the circular travel is detected by means of the difference in rotational speed between one wheel of an axle which is on the inside of the bend and the other wheel of the axle which is on the outside of the bend.

4. Process according to any of Claims 1 to 3, **characterized in that** the axle lift device is activated at the entry to the bend.

5. Process according to any of Claims 1 to 4, **characterized in that** actuation is switched off during shunting travel and/or backward travel.

6. Process according to any of Claims 1 to 5, **characterized in that**, if the axle unit is also equipped with a liftable rear axle, lowering of the front axle is not permitted when the rear axle is lifted.

7. Process according to any of Claims 1 to 6, **characterized in that**, on a road with a lot of bends, the front axle is permanently lowered.

8. Process according to Claim 7, **characterized in that** the permanent lowering is effected by manual operation of a switch.

## Revendications

1. Procédé pour activer le dispositif de levage d'essieu d'un véhicule semi-remorque avec semi-remorque à plusieurs essieux, de préférence à trois essieux, dont le premier essieu est relevable,
**caractérisé**
**en ce que** dans le cas d'une marche circulaire au-dessous d'un rayon à prédéfinir, le dispositif de levage d'essieu est actionné dans le sens d'un abaissement du premier essieu.

2. Procédé selon la revendication 1, **caractérisé en ce que** la reconnaissance de la marche circulaire s'effectue par un capteur d'angle de coude dans la zone de la plaque de sellette ou par un capteur d'angle de braquage dans la direction du véhicule tracteur.

3. Procédé selon la revendication 1, **caractérisé en ce que** la reconnaissance de la marche circulaire s'effectue au moyen de la différence des vitesses de rotation entre une roue sur le côté intérieur de la courbe et une roue sur le côté extérieur de la courbe, d'un essieu.

4. Procédé selon l'une des revendications 1 à 3, **caractérisé en ce que** l'activation du dispositif de levage d'essieu s'effectue lors de l'entrée dans la courbe.

5. Procédé selon l'une des revendications 1 à 4, **caractérisé en ce que** l'actionnement est désactivé en cas de manoeuvre et/ou de marche arrière.

6. Procédé selon l'une des revendications 1 à 5, **caractérisé en ce que** dans le cas dans lequel le train d'essieux est équipé également d'un essieu arrière relevable, l'abaissement de l'essieu avant est supprimé lorsque l'essieu arrière est relevé.

7. Procédé selon l'une des revendications 1 à 6, **caractérisé en ce que** sur un trajet comportant un grand nombre de courbes l'essieu avant est constamment abaissé.

8. Procédé selon la revendication 7, **caractérisé en ce que** l'abaissement permanent s'effectue par actionnement manuel d'un interrupteur.
